# EUROPÄISCHE PATENTSCHRIFT

(11) **EP 0 693 003 B1**
(45) Veröffentlichungstag und Bekanntmachung des Hinweises auf die Patenterteilung: **10.09.1997**
(21) Anmeldenummer: 94912495.2
(22) Anmeldetag: 22.03.1994
(51) Int. Cl.: B05D 7/14, B05D 7/00

(54) **DREILAGIGES METALLROHRBESCHICHTUNGSMITTEL SOWIE VERFAHREN ZUR AUSSENBESCHICHTUNG VON METALLROHREN IM DREILAGENVERFAHREN**
THREE-COAT COATING SYSTEM FOR METAL PIPES AND METHOD OF COATING THE OUTSIDE OF A METAL PIPE WITH A THREE-COAT COATING OF THIS KIND
AGENT DE REVETEMENT A TROIS COUCHES POUR TUBES METALLIQUES ET PROCEDE PERMETTANT DE RECOUVRIR EN TROIS COUCHES L'EXTERIEUR DE TUBES METALLIQUES

(30) Priorität: 31.03.1993 DE 4310525
(43) Veröffentlichungstag der Anmeldung: 24.01.1996
(73) Patentinhaber: BASF Lacke + Farben AG, 48165 Münster-Hiltrup (DE)
(72) Erfinder: BLÖMER, Werner, D-48607 Ochtrup (DE); REITER, Udo, D-48291 Telgte (DE); RADEMACHER, Josef, Beverly Hills, MI 48025 (US)
(86) Internationale Anmeldenummer: EP9400888
(87) Internationale Veröffentlichungsnummer: WO9422598

(56) Entgegenhaltungen:
- WO-A-92/03234
- DE-A- 2 944 809
- GB-A- 1 542 333
- DATABASE WPI Section Ch, Week 9119, 1991 Derwent Publications Ltd., London, GB; Class A04, AN 91-136437 & JP,A,3 073 340 (NIPPON STEEL CORP.) 28. März 1991
- PATENT ABSTRACTS OF JAPAN vol. 015, no. 177 (C-829) 7. Mai 1991 & JP,A,03 042 078 (NIPPON STEEL CORP.) 22. Februar 1991

## Beschreibung

Die Vorliegende Erfindung betrifft dreilagige Metallrohrbeschichtungsmittel auf der Basis eines Epoxidharze und phenolische Vernetzungsmittel enthaltenden Pulverprimers, eines thermoplastischen Hartklebers und einer Polyolefin-Ummantelung. Die Erfindung betrifft weiterhin ein Verfahren zur Außenbeschichtung von Metallrohren im Dreilagenverfahren.

Metallrohre werden weltweit für den Transport beispielsweise von Erdöl, Erdölprodukten, Gas, Wasser sowie Feststoffen von der Fund- oder Produktionsstätte zum Verbraucher verwendet. Metallrohre müssen gegen Korrosion einerseits sowie mechanische Einwirkungen andererseits geschützt sein, um die Betriebssicherheit der Leitungen über einen langen Zeitraum zu gewährleisten. Außenbeschichtungen von Metallrohren müssen eine hohe Schlag-, Druck- und Abriebfestigkeit aufweisen, und es müssen Beschädigungen der Außenbeschichtungen beim Transport, bei der Lagerung, der Verlegung und beim Betrieb der Metallrohre verhindert werden. Außerdem sollten Metallrohraußenbeschichtungsmittel eine gute Alterungsbeständigkeit, eine gute Freibewitterungsbeständigkeit bei der Zwischenlagerung der Rohre, eine ausgezeichnete Beständigkeit gegenüber äußeren Einflüssen, gute dielektrische Eigenschaften und eine geringe Durchlässigkeit für Wasserdampf und für Gase aufweisen.

Zur Außenbeschichtung von Metallrohren sind einschichtige Systeme auf Epoxidharzbasis bekannt, die jedoch aufgrund der geringen mechanischen Festigkeit der Epoxidharzbeschichtungen bei schlagartiger Beanspruchung nachteilig sind.

Es ist weiterhin bekannt, Metallrohre außen mit Hilfe eines Dreilagenverfahrens zu beschichten, wobei auf das Metallsubstrat zunächst ein Pulverprimer auf Epoxidharzbasis appliziert wird, auf den Pulverprimer ein Heiß- bzw. Schmelzkleber aufgebracht wird und anschließend eine Polyolefin-Ummantelung appliziert wird. Derartige dreilagige Beschichtungen für Metallrohre sind beispielsweise beschrieben in EP-A-57 823, GB 1 542 333, DE-A-22 22 911, DE-A-22 57 135, DE-A-19 65 802, DE-A-29 44 809, DE-A-32 30 955 und JP-A-3073340. Diese dreischichtigen Systeme aus Epoxidharzprimer, thermoplastischem Hartkleber und Polyolefin-Mantelmaterial können viele Anforderungen weitgehend erfüllen. Sie sind den einschichtigen deutlich überlegen. Die Drei-Schicht-Systeme verbinden die positiven Eigenschaften der duroplastischen Grundschicht (gute Haftung auf Stahl) mit der thermoplastischen Polyolefin-Ummantelung (Zähigkeit, Langzeitbeständigkeit, gute dielektrische Eigenschaften, niedrige Gasdurchlässigkeit).

Es ist bekannt, als Pulverprimer bei den dreilagigen Metallrohraußenbeschichtungsmitteln Pulverlacke auf Basis von Epoxidharzen, Dicyandiamid-Härtern und kristallinen oder amorphen Kieselsäuren zu verwenden. Des weiteren sind auch Pulverprimer bekannt, die aus Epoxidharzen, phenolischen Härtern und amorphen Kieselsäure-Füllstoffen bestehen.

Die Nachteile der bisher bekannten Drei-Schicht-Systeme bestehen jedoch in einer unzureichenden Schälfestigkeit nach Heißwasser-Einlagerung, wobei eine teilweise Pulverlackablösung vom Untergrund beim Abschälen nach Heißwasser-Lagerung auftritt. Des weiteren sind die Eigenschaften bezüglich der Unterwanderung bei der kathodischen Delamination eine ständig zu verbessernde Zielgröße.

Die der vorliegenden Erfindung zugrunde liegende Aufgabe bestand infolgedessen darin, mehrschichtige Beschichtungen für die Beschichtung von Metallrohren zur Verfügung zu stellen, die die zuvor beschriebenen Nachteile nicht aufweisen. So sollte insbesondere der Schälwiderstand der Beschichtungen nach Heißwasser-Lagerung erhöht werden, des weiteren sollten hervorragende Ergebnisse hinsichtlich der kathodischen Delamination erzielt werden. Die Beschichtungen sollten festhaftend und widerstandsfähig sein und einen hohen Korrosionsschutz gewährleisten.

Die der vorliegenden Erfindung zugrunde liegende Aufgabe wird gelöst durch dreilagige Metallrohrbeschichtungsmittel auf Basis eines Epoxidharze und phenolische Vernetzungsmittel enthaltenden Pulverprimers, eines thermoplastischen Hartklebers und einer Polyolefin-Ummantelung. Die Metallrohrbeschichtungsmittel sind dadurch gekennzeichnet, daß der Pulverprimer epoxidierte Novolakharze, phenolische Vernetzungsmittel, Katalysatoren für die Epoxidharz-Phenolharz-Aushärtung sowie Füllstoffe basierend auf kristallinen Kieselsäure-Modifikationen enthält.

Der in Pulverform vorliegende Epoxidharzprimer enthält Epoxid-Novolakharze. Bei diesen Novolakharzen sind die phenolischen Hydroxylgruppen mit Alkyl-, Aryl- oder ähnlichen Gruppen verethert. Durch Umsetzung der phenolischen Hydroxylgruppen mit Epichlorhydrin werden Epoxidgruppen in das Molekul eingebaut. Ausgehend von Novolaken bildet sich der sogenannte Epoxid-Novolak. Die epoxidierten Novolake sind strukturverwandt mit Bisphenol A-Harzen. Der Grundtyp für die epoxidierten Novolake ist der Diglycidylether des Bisphenol F. Epoxidierte Novolake können hergestellt werden durch Epoxidierung von Novolaken, die z. B. aus 3 bis 4 Phenolkernen, welche über Methylenbrücken miteinander verbunden sind, bestehen. Als Novolakharze können auch alkylsubstituierte Phenole, welche mit Formaldehyd umgesetzt werden, verwendet werden. Epoxidierte Novolakharze haben eine gegenüber Bisphenol A-Harzen erhöhte Funktionalität. Vorzugsweise werden epoxidierte Novolakharze mit einer mittleren Funktionalität im Bereich von 2,4 bis 2,8 und einem Epoxidäquivalentgewicht im Bereich von 600 bis 850 verwendet.

Geeignete epoxidierte Novolakharze sind im Handel beispielsweise erhältlich unter der Bezeichnung DER 672U (Hersteller: Dow Chemicals), Epikote 2014 (Hersteller: Firma Shell) und GT 7220 und GT 7255 (Hersteller: Ciba Geigy).

Zur Aushärtung der epoxidierten Novolakharze enthält der Pulverprimer phenolische Vernetzungsmittel. Dabei kann z. B. jedes beliebige Phenolharz verwendet werden, so lange es die für die Reaktivität erforderliche Methylol-Funktionalität aufweist. Bevorzugte Phenolharze sind unter alkalischen Bedingungen hergestellte Reaktionsprodukte von Phenol, substituierten Phenolen und Bisphenol A mit Formaldehyd. Unter derartigen Bedingungen wird die Methylolgruppe entweder ortho- oder paraständig mit dem aromatischen Ring verknüpft. Besonders bevorzugt werden gemaß der vorliegenden Erfindung als phenolische Vernetzungsmittel hydroxylgruppenhaltige Bisphenol-A- oder Bisphenol-F-Harze mit einem Hydroxyäquivalentgewicht im Bereich von 180 bis 600, besonders bevorzugt im Bereich von 180 bis 300, eingesetzt. Derartige phenolische Härter werden hergestellt durch Umsetzung von Bisphenol-A oder Bisphenol-F mit glycidylgruppenhaltigen Komponenten, wie z. B. dem Diglycidether von Bisphenol-A. Derartige phenolische Vernetzungsmittel sind beispielsweise erhältlich unter der Handelsbezeichnung DEH 81, DEH 82 und DEH 87 der Firma Dow, DX 171 der Firma Shell und XB 3082 der Firma Ciba Geigy.

Der Epoxidharzprimer enthält einen oder mehrere geeignete Katalysatoren für die Epoxidharz-Phenolharz-Aushärtung. Geeignete Katalysatoren sind Phosphoniumsalze organischer oder anorganischer Säuren, Imidazole und Imidazolderivate, quartäre Ammoniumverbindungen sowie Amine. Die Katalysatoren werden i.a. in Anteilen von 0,001 Gew.-% bis etwa 10 Gew.-%, bezogen auf das Gesamtgewicht des Epoxidharzes und des phenolischen Vernetzungsmittels, eingesetzt.

Beispiele für geeignete Phosphoniumsalz-Katalysatoren sind Ethyltriphenylphosphoniumiodid, Ethyltriphenylphosphoniumchlorid, Ethyltriphenylphosphoniumthiocyanat, Ethyltriphenylphosphonium-Acetat-Essigsäurekomplex, Tetrabutylphosphoniumiodid, Tetrabutylphosphoniumbromid und Tetrabutylphosphonium-Acetat-Essigsäurekomplex. Diese sowie weitere geeignete Phosphonium-Katalysatoren sind z. B. beschrieben in US-PS 3,477,990 und US-PS 3,341,580.

Geeignete Imidazol-Katalysatoren sind beispielsweise 2-Styrylimidazol, 1-Benzyl-2-methylimidazol, 2-Methylimidazol, 2-Butylimidazol. Diese sowie weitere Imidazol-Katalysatoren sind z. B. beschrieben in dem belgischen Patent Nr. 756,693.

Zum Teil enthalten handelsübliche phenolische Härter bereits Katalysatoren für die Epoxidharz-Phenolharz-Vernetzung.

Der Pulverprimer enthält als Füllstoff kristalline Kieselsäure-Modifikationen. Diese werden üblicherweise in einem Anteil von 10 bis 50 Gew.-%, bezogen auf das Gesamtgewicht des Pulverprimers eingesetzt. In einigen Fällen sind auch Füllstoffanteile von mehr als 50 Gew.-% möglich. Kristalline Kieselsäure-Modifikationen sind beispielsweise erhältlich unter den Bezeichnungen Sikron SH 500 und Sikron SF 600 (Hersteller: Quarzwerke GmbH) sowie Quarzsand F 31, F 32, F 34, F 36, G 30, G 32, G 34, G 36, H 30, H 31, H 32, H 33 und H 34 (Hersteller: Quarzwerke GmbH).

Zu den kristallinen Kieselsäure-Modifikationen zählen Quarz, Cristobalit, Tridymit, Keatit, Stishovit, Melanophlogit, Coesit und faserige Kieselsäure. Bevorzugt werden oberflächenbehandelte kristalline Kieselsäure-Modifikationen als Füllstoffe in den Pulverprimern eingesetzt. Es handelt sich dabei beispielsweise um silanmodifizierte Kieselsäure-Modifikationen auf der Basis von Quarz, Cristobalit und Quarzgut. Derartige Füllstoffe sind unter dem eingetragenen Warenzeichen Silbond® (Hersteller: Quarzwerke GmbH) erhältlich.

Besonders vorteilhaft ist es, wenn als Füllstoffe in den Pulverprimern glycidylfunktionalisierte Kieselsäure-Modifikationen verwendet werden. Diese sind beispielsweise erhältlich unter der Bezeichnung Silbond 600 EST sowie Silbond 6000 EST (Hersteller: Quarzwerke GmbH) und werden hergestellt durch Umsetzung von kristallinen Kieselsäure-Modifikationen mit Epoxisilanen.

Vorteilhafterweise enthält der Pulverprimer 10 bis 40 Gew.-%, bezogen auf das Gesamtgewicht des Pulverprimers, an kristallinen Kieselsäure-Modifikationen.

Die Pulverprimer können noch weitere anorganische Füllstoffe, beispielsweise Titandioxid, Bariumsulfat und Füllstoffe auf Silikat-Basis, wie z. B. Talkum, Kaolin, Magnesium-, Aluminiumsilikate, Glimmer und ähnliche enthalten. Außerdem können die Pulverprimer gegebenenfalls noch weitere Hilfs- und Zusatzstoffe enthalten. Beispiele hierfür sind Verlaufsmittel, Rieselhilfen, Entlüftungsmittel, wie z. B. Benzoin.

Die Herstellung der Pulverprimer erfolgt nach bekannten Methoden (vergl. z. B. Produkt-Information der Firma BASF Lacke + Farben AG, "Pulverlacke", 1990) durch Homogenisieren und Dispergieren, beispielsweise mittels eines Extruders, Schneckenkneters u.ä.. Nach Herstellung der Pulverlacke werden diese durch Vermahlen und gegebenenfalls durch Sichten und Sieben auf die gewünschte Korngrößenverteilung eingestellt.

Die Pulverprimer werden elektrostatisch oder triboelektrostatisch auf die zuvor erhitzte Metallrohr-Oberfläche aufgebracht. Die Auftragsstärke der Epoxy-Pulverprimer liegt üblicherweise im Bereich von 30 bis 400 µm.

Die zweite Schicht der Metallrohrbeschichtung, der thermoplastische Hartkleber, wird entweder im Extrusionsverfahren als Schmelze oder im Pulver-Auftragsverfahren auf die Pulverprimerschicht aufgetragen. Geeignete Klebstoffe (Haftvermittler) sind Copolymere, Pfropfcopolymere und Ionomere, welche Carboxyl- oder Anhydridgruppen oder Gruppen, die zu Carboxylgruppen hydrolisierbar sind, aufweisen. Geeignete Copolymere sind herstellbar durch Copolymerisation von Ethylen oder Propylen mit α,β-ethylenisch ungesättigten Carbonsäuren, wie z. B. Acrylsäure, Methacrylsäure, Itaconsäure, Crotonsäure, Isocrotonsäure, Maleinsäure und Fumarsäure, den entsprechenden Anhydriden oder den entsprechenden Estern oder Halbestern mit 1 bis 8 Kohlenstoffatomen im Alkoholrest. Ebenfalls einsetzbar sind auch die entsprechenden Salze der aufgeführten Carbonsäuren. Geeignete Klebstoffe sind weiterhin Polymere, welche herstellbar sind durch Pfropfung von mindestens einem Polymeren aus der Gruppe der Polyolefine mit bis zu 10 Gew.-%, bezogen auf das Gesamtgewicht der Monomeren, mindestens eines Monomeren aus der Gruppe der α,β-ethylenisch ungesättigten Carbonsäuren, deren Anhydriden, deren Estern oder Salzen in Gegenwart oder Abwesenheit von Peroxiden. Bewährte thermoplastische Hartkleber für die Metallrohrbeschichtung sind Copolymerisate aus Ethylen, (Meth)acrylsäureestern und (Meth)acrylsäure. Derartige Klebstoffe sind im Handel erhältlich unter der Bezeichnung Lucalen® (Hersteller: BASF AG). Beispiele für geeignete Lucalen-Typen sind Lucalen A 2910 M, Lucalen A 2910 M Q 47, Lucalen A 3110 M und Lucalen A 3110 M Q 244. Die Auftragsstärke des thermoplastischen Hartklebers liegt üblicherweise im Bereich von 100 bis 500 µm, und die Substrattemperatur bei der Applikation des thermoplastischen Hartklebers liegt im Bereich von 150 bis etwa 220 °C. Es ist darauf zu achten, daß zum Zeitpunkt der Applikation des Haftvermittlers die Epoxyharz-Pulverschicht noch nicht vollständig ausgehärtet ist, um einen festen Verbund herzustellen.

Die erfindungsgemäßen Metallrohrbeschichtungsmittel enthalten zur Ausbildung der dritten Schicht Polyolefin-Beschichtungsmittel, die auf den aufgeschmolzenen Kleber bei erhöhter Temperatur üblicherweise im Extrusionsverfahren aufgebracht werden. Geeignete Polyolefine sind Polyethylen niedriger Dichte, mittlerer Dichte, hoher Dichte, Linear Low und Linear Very Low Density Polyethylen sowie Polypropylene, deren Copolymere mit Ethylen und weiteren Monomeren sowie die Copolymeren des Ethylens und des Propylens mit einem oder mit mehreren Comonomeren aus der Gruppe der Vinylester, Vinylalkylether, der ungesättigten Mono- und Dicarbonsäuren, deren Salzen, Anhydriden und Estern. Besonders bevorzugt wird als Polyolefin-Beschichtungsmittel Ethylen-Homopolymerisat eingesetzt. Geeignete Polyethylene sind beispielsweise erhältlich unter der Handelsbezeichnung Lupolen® (Hersteller: BASF AG). Beispiele für geeignete Lupolene sind Lupolen 2441 D, Lupolen 2452 D, Lupolen 3821 D und Lupolen 3652 D (BASF AG).

Die vorliegende Erfindung betrifft weiterhin ein Verfahren zur Außenbeschichtung von Metallrohren im Dreilagenverfahren, wobei auf das Metallrohr Pulverprimer auf Epoxidharzbasis appliziert werden, auf die Pulverprimer ein thermoplastischer Hartkleber aufgebracht wird und anschließend ein Polyolefin-Beschichtungsmittel appliziert wird. Das Verfahren ist dadurch gekennzeichnet, daß der Pulverprimer epoxidierte Novolakharze, Phenolharz-Vernetzungsmittel sowie Füllstoffe basierend auf kristallinen Kieselsäure-Modifikationen enthält. Bezüglich der Beschreibung des mehrschichtigen Metallrohrbeschichtungsmittels wird auf die vorherigen Ausführungen verwiesen. Bei dem erfindungsgemäßen Verfahren wird die Metallrohroberfläche üblicherweise zunächst von Rost, Fett, Öl, Staub usw. gereinigt. Gegebenenfalls wird eine chemische Vorbehandlung (Chromatierung und/oder Phosphatierung) durchgeführt. Anschließend werden die gereinigten Metallrohre durch induktive Beheizung oder im Gasofen auf eine Beschichtungstemperatur von etwa 170 bis 220 °C erwärmt. Der Pulverprimer wird elektrostatisch oder mittels Reibungsaufladung auf die heiße Metallrohroberfläche appliziert. Übliche Auftragsstärken des Pulverprimers liegen im Bereich von 30 bis 400 µm, vorzugsweise im Bereich von 80 bis 100 µm. Gemäß dem vorliegenden Verfahren wird anschließend die zweite Schicht, der thermoplastische Hartkleber, entweder im Extrusionsverfahren als Schmelze oder im Pulver-Auftragsverfahren auf die Pulverprimerschicht appliziert. Ein besonders guter Verbund zwischen der Pulverprimerschicht und der Kleberschicht wird erreicht, wenn der Vernetzungsgrad des Pulverprimers zum Zeitpunkt der Applikation des thermoplastischen Hartklebers 40 bis 60 % beträgt. Auf jeden Fall ist jedoch darauf zu achten, daß der Epoxidharz-Pulverprimer zum Zeitpunkt der Applikation des thermoplastischen Hartklebers noch nicht vollständig ausgehärtet sein darf, um eine ausreichende Haftung zu erreichen. Bei der Applikation des thermoplastischen Klebers liegt die Substrattemperatur üblicherweise im Bereich von 150 bis 220 °C. Die übliche Auftragsstärke des thermoplastischen Haftvermittlers liegt im Bereich von 100 bis 500 µm, vorzugsweise im Bereich von 180 bis 350 µm. In einer weiteren Stufe wird dann auf den aufgeschmolzenen thermoplastischen Hartkleber das Polyolefin-Mantelmaterial im Extrusionsverfahren aufgebracht. Übliche Auftragsstärken der Polyolefin-Mantelschicht liegen im Bereich von 1,8 bis 3,7 mm. Bei kleinen Rohrdurchmessern wird das Polyolefin-Mantelmaterial im Ringdüsen-Verfahren mit Querkopf, bei größeren Metallrohrdurchmessern im Extrusionswickelverfahren mit Breitschlitzdüse aufgebracht. Beim Ringdüsen-Verfahren kann einerseits der thermoplastische Kleber mit dem Polyolefin-Mantelmaterial coextrudiert werden, oder es können der thermoplastische Hartkleber im Pulver-Auftragsverfahren und das Polyolefin-Mantelmaterial durch Schlauchextrusion appliziert werden. Nach der dreilagigen Beschichtung wird das ummantelte Metallrohr üblicherweise im Wasserbad abgekühlt.

Die nach dem erfindungsgemäßen Verfahren erhältlichen dreilagigen Metallrohrbeschichtungen weisen hervorragende Eigenschaften auf. So tritt keinerlei Ablösung des Pulverprimers vom Untergrund auf. Gute Eigenschaften bezüglich der Reißdehnung der Polyolefin-Mantelschicht und des spezifischen Umhüllungswiderstandes werden erreicht. Es wird eine Erhöhung des Schälwiderstandes der Beschichtung nach Heißwasser-Lagerung erzielt, und die Ergebnisse bezüglich der kathodischen Delamination sind sehr gut.

Nachfolgend wird die Erfindung anhand von Ausführungsbeispielen näher erläutert. Teile bedeuten Gewichtsteile, sofern nichts anderes angegeben wird.

### Vergleichsbeispiel 1:

Es wird ein Pulverlack folgender Zusammensetzung hergestellt:

| | |
|---|---|
| Titan-Rutil | 5 Gew.-% |
| kristalline Kieselsäure | 30 Gew.-% |
| Verlaufsmittel | 1 Gew.-% |
| Entlüftungsmittel | 1 Gew.-% |
| Epoxidharz (Epikote 1055 der Firma Shell mit einem Epoxidäquivalentgewicht von 800) | 59 Gew.-% |
| Dicyandiamid | 4 Gew.-% |

### Vergleichsbeispiel 2:

Es wird ein Pulverlack folgender Zusammensetzung hergestellt:

| | |
|---|---|
| Titan-Rutil | 5 Gew.-% |
| amorphe Kieselsäure | 30 Gew.-% |
| Verlaufsmittel | 1 Gew.-% |
| Entlüftungsmittel | 1 Gew.-% |
| epoxidiertes Novolakharz (Shell Epikote 2014, EEW 700) | 48 Gew.-% |
| phenolischer Härter auf Bisphenol-A-Basis (Handelsprodukt XB 3082 der Firma Ciba-Geigy, Hydroxyäquivalentgewicht 250) | 15 Gew.-% |

### Beispiel 1:

Es wird ein Pulverlack hergestellt aus folgenden Bestandteilen:

| | |
|---|---|
| Titan-Rutil | 5 Gew.-% |
| kristalline Kieselsäure, glycidylgruppenfunktionalisiert (Silbond 6000 EST der Quarzwerke GmbH) | 30 Gew.-% |
| Verlaufsmittel | 1 Gew.-% |
| Entlüftungsmittel | 1 Gew.-% |
| epoxidiertes Novolakharz (Epikote 2014 der Firma Shell, EEW 700) | 48 Gew.-% |
| phenolischer Härter auf Bisphenol-A-Basis (Handelsprodukt XB 3082 der Firma Ciba-Geigy, Hydroxyäquivalentgewicht 250) | 15 Gew.-% |

Die zuvor beschriebenen drei Rezepturen (Vergleichsbeispiel 1 und 2, Beispiel 1) werden zu Pulverlacken handelsüblicher Korngrößenverteilung verarbeitet. Die hergestellten drei Pulverlacke werden als Primer im Dreilagenverfahren zur Außenbeschichtung von Metallrohren eingesetzt.

Dazu werden Rohre vom Durchmesser 300 mm mit einer Wandstärke von 12 mm in einer Strahlanlage auf Sauberkeit SA 3 gestrahlt. Die Rauhtiefe sollte ca. 50 µm betragen. Die Rohre werden nun mit einer Induktionsspule auf 200 ± 5 °C erhitzt.

Die Pulverlacke der Vergleichsbeispiele 1 und 2 und des Beispiels 1 werden elektrostatisch mit einer Schichtdicke von 80 bis 100 µm appliziert. Nachdem ein Vernetzungsgrad von 40 bis 60 % bestimmt worden ist, wird jeweils elektrostatisch ein pulverförmiger thermoplastischer Hartkleber (Lucalen A 3110 M Q 244 der Firma BASF AG) in einer Schichtstärke von 300 ± 50 µm auf den Pulverprimer appliziert. Ca. 10 sec. nach der Kleberextrusion wird im Ringdüsen-Verfahren bei 220 ± 10 °C eine 3 ± 0,2 mm starke Schicht des Polyolefins mit der Handelsbezeichnung Lupolen 3652 D (Hersteller: BASF AG) aufgetragen. Ca. 30 sec. nach Fertigstellung der dreilagigen Beschichtung werden die Rohre im Wasserbad auf Raumtemperatur abgekühlt.

Die drei erhaltenen Rohre werden in ca. 15 cm breite Prüfringe zerteilt. Von den drei verschiedenen Dreischichtaufbauten werden CD-Tests gemäß DIN 30671 unter den Bedingungen 30 Tage Raumtemperatur, 2 Tage 65 °C, und 14 Tage 65 °C in 0,5 molarer Kochsalzlösung ausgeführt.

| Unterwanderung [mm] | | | |
|---|---|---|---|
| | 2 Tage, 65 °C | 14 Tage, 65 °C | 30 Tage, 23 °C |
| Vergleichsbeispiel 1 | 2 | 7 | 4 |
| Vergleichsbeispiel 2 | 2 | 5 | 4 |
| Beispiel 1 | 0 | 5 | 1 |

Des weiteren wird der Schälwiderstand für alle drei Aufbauten gemäß DIN 30 670 bestimmt. In allen Fällen werden Werte > 40 N/cm bei 23 °C gefunden.

Von jedem Schichtaufbau wird ein Prüfsegment 6 Wochen in Leitungswasser bei 80 °C gelagert.

Für den Rohrabschnitt mit dem Primerpulver gemäß Vergleichsbeispiel 1 findet man Schälwerte von ca. 15 N/cm. Dabei tritt neben einem Kohäsivbruch der Kleberschicht auch eine Ablösung des Pulverlackes vom Untergrund auf.

Für den Rohrabschnitt mit dem Primerpulver gemäß Vergleichsbeispiel 2 findet man Schälwerte von ca. 20 N/cm. Auch hier wird neben Kohäsivbruch der Kleberschicht eine teilweise punktuelle Ablösung des Pulverlackes vom Untergrund beobachtet.

Für den Rohrabschnitt mit dem Pulverprimer gemäß Beispiel 1 werden Schälwerte von über 25 N/cm gefunden. Es tritt ausschließlich Kohäsivbruch in der Kleberschicht auf.

## Patentansprüche

1. Dreilagiges Metallrohrbeschichtungsmittel auf Basis eines Epoxidharze und phenolische Vernetzungsmittel enthaltenden Pulverprimers, eines thermoplastischen Hartklebers und einer Polyolefin-Ummantelung, dadurch gekennzeichnet, daß der Pulverprimer epoxidierte Novolakharze, phenolische Vernetzungsmittel, Katalysatoren für die Epoxidharz-Phenolharz-Aushärtung sowie Füllstoffe basierend auf kristallinen Kieselsäure-Modifikationen enthält.

2. Metallrohrbeschichtungsmittel nach Anspruch 1, dadurch gekennzeichnet, daß die epoxidierten Novolakharze eine mittlere Funktionalität im Bereich von 2,4 bis 2,8 und ein Epoxidäquivalentgewicht im Bereich von 600 bis 850 haben.

3. Metallrohrbeschichtungsmittel nach Anspruch 1 oder 2, dadurch gekennzeichnet, daß als phenolische Vernetzungsmittel hydroxylgruppenhaltige Bisphenol-A- oder Bisphenol-F-Harze mit einem Hydroxyäquivalentgewicht im Bereich von 180 bis 600 verwendet werden.

4. Metallrohrbeschichtungsmittel nach Anspruch 1 bis 3, dadurch gekennzeichnet, daß als Füllstoffe im Pulverprimer glycidylfunktionalisierte Kieselsäure-Modifikationen verwendet werden.

5. Metallrohrbeschichtungsmittel nach Anspruch 1 bis 4, dadurch gekennzeichnet, daß der Pulverprimer 10 bis 40 Gew.-%, bezogen auf das Gesamtgewicht des Pulverprimers, kristalline Kieselsäure-Modifikationen enthält.

6. Verfahren zur Außenbeschichtung von Metallrohren im Dreilagenverfahren, wobei auf das Metallrohr ein Pulverprimer auf Epoxidharzbasis appliziert wird, auf den Pulverprimer ein thermoplastischer Hartkleber aufgebracht wird und anschließend eine Polyolefin-Ummantelung appliziert wird, dadurch gekennzeichnet, daß der Pulverprimer epoxidierte Novolakharze, phenolische Vernetzungsmittel, Katalysatoren für die Epoxidharz-Phenolharz-Aushärtung sowie Füllstoffe basierend auf kristallinen Kieselsäure-Modifikationen enthält.

7. Verfahren nach Anspruch 6, dadurch gekennzeichnet, daß die epoxidierten Novolakharze eine mittlere Funktionalität im Bereich von 2,4 bis 2,8 und ein Epoxidäquivalentgewicht im Bereich von 600 bis 850 haben.

8. Verfahren nach Anspruch 6 oder 7, dadurch gekennzeichnet, daß als Füllstoffe im Pulverprimer glycidylfunktionalisierte Kieselsäure-Modifikationen verwendet werden.

9. Verfahren nach Anspruch 6 bis 8, dadurch gekennzeichnet, daß der Pulverprimer 10 bis 40 Gew.-%, bezogen auf das Gesamtgewicht des Pulverprimers, kristalline Kieselsäure-Modifikationen enthält.

10. Verfahren nach Anspruch 6 bis 9, dadurch gekennzeichnet, daß als phenolische Vernetzungsmittel hydroxylgruppenhaltige Bisphenol-A- oder Bisphenol-F-Harze mit einem Hydroxyäquivalentgewicht im Bereich von 180 bis 600 verwendet werden.

11. Verfahren nach Anspruch 6 bis 10, dadurch gekennzeichnet, daß als thermoplastischer Hartkleber Copolymerisate aus Ethylen, (Meth)acrylsäure und (Meth)acrylsäureestern mit 1 bis 8 Kohlenstoffatomen im Alkoholrest verwendet werden.

12. Verfahren nach Anspruch 6 bis 11, dadurch gekennzeichnet, daß als Polyolefin-Ummantelung eine Polyethylen-Ummantelung verwendet wird.

13. Verfahren nach Anspruch 6 bis 12, dadurch gekennzeichnet, daß der Vernetzungsgrad des Pulverprimers bei der Applikation des thermoplastischen Hartklebers 40 bis 60 % beträgt.

## Claims

1. Three-layer metal pipe coating composition based on a powder primer containing epoxy resins and phenolic crosslinking agents, on a thermoplastic hard adhesive and on a polyolefin cladding, characterized in that the powder primer contains epoxidized novolak resins, phenolic crosslinking agents, catalysts for the epoxy resin/phenolic resin curing and fillers based on crystalline silicic acid modifications.

2. Metal pipe coating composition according to Claim 1, characterized in that the epoxidized novolak resins have an average functionality in the range from 2.4 to 2.8 and an epoxide equivalent weight in the range from 600 to 850.

3. Metal pipe coating composition according to Claim 1 or 2, characterized in that the phenolic crosslinking agents used are hydroxyl group-containing bisphenol A or bisphenol F resins having a hydroxy equivalent weight in the range from 180 to 600.

4. Metal pipe coating composition according to Claim 1 to 3, characterized in that the fillers used in the powder primer are glycidyl-functionalized silicic acid modifications.

5. Metal pipe coating composition according to Claim 1 to 4, characterized in that the powder primer contains from 10 to 40 % by weight, based on the overall weight of the powder primer, of crystalline silicic acid modifications.

6. Process for the exterior coating of metal pipes by a three-layer method, which involves applying a powder primer based on epoxy resin to the metal pipe, applying a thermoplastic hard adhesive to the powder primer, and subsequently applying a polyolefin cladding, characterized in that the powder primer contains epoxidized novolak resins, phenolic crosslinking agents, catalysts for the epoxy resin/phenolic resin curing and fillers based on crystalline silicic acid modifications.

7. Process according to Claim 6, characterized in that the epoxidized novolak resins have an average functionality in the range from 2.4 to 2.8 and an epoxide equivalent weight in the range from 600 to 850.

8. Process according to Claim 6 or 7, characterized in that the fillers used in the powder primer are glycidyl-functionalised silicic acid modifications.

9. Process according to Claim 6 to 8, characterized in that the powder primer contains from 10 to 40 % by weight, based on the overall weight of the powder primer, of crystalline silicic acid modifications.

10. Process according to Claim 6 to 9, characterized in that the phenolic crosslinking agents used are hydroxyl group-containing bisphenol A or bisphenol F resins having a hydroxy equivalent weight in the range from 180 to 600.

11. Process according to Claim 6 to 10, characterized in that the thermoplastic hard adhesive used comprises copolymers of ethylene, (meth)acrylic acid and (meth)acrylic esters having 1 to 8 carbon atoms in the alcohol residue.

12. Process according to Claim 6 to 11, characterized in that the polyolefin cladding used is a polyethylene sleeve.

13. Process according to Claim 6 to 12, characterized in that the degree of crosslinking of the powder primer during the application of the thermoplastic hard adhesive is from 40 to 60 %.

## Revendications

1. Agent de revêtement à trois couches pour tubes métalliques à base d'une peinture d'apprêt en poudre contenant une résine époxyde et un agent de réticulation phénolique, d'un adhésif dur thermoplastique, et d'une enveloppe de polyoléfine, caractérisé en ce que la peinture d'apprêt en poudre contient des résines Novolaques époxydées, des agents de réticulation phénoliques, des catalyseurs pour le durcissement résine époxyde-résine phénolique ainsi que des charges se basant sur des modifications cristallines de l'acide silicique.

2. Agent de revêtement pour tubes métalliques selon la revendication 1, caractérisé en ce que les résines Novolaques époxydées ont une fonctionnalité moyenne dans le domaine de 2,4 à 2,8 et un poids équivalent en époxyde dans le domaine de 600 à 850.

3. Agent de revêtement pour tubes métalliques selon la revendication 1 ou 2, caractérisé en ce que l'on utilise, en tant qu'agent de réticulation phénolique, des résines de bisphénol A ou de bisphénol F contenant des groupements hydroxyle ayant un poids équivalent en hydroxyle dans le domaine de 180 à 600.

4. Agent de revêtement pour tubes métalliques selon la revendication 1 à 3, caractérisé en ce que l'on utilise en tant que charges dans la peinture d'apprêt en poudre des modifications de l'acide silicique fonctionnalisées en glycidyle.

5. Agent de revêtement pour tubes métalliques selon la revendication 1 à 4, caractérisé en ce que la peinture d'apprêt en poudre contient de 10 à 40 % en poids, par rapport au poids total de la peinture d'apprêt en poudre, de modifications cristallines de l'acide silicique.

6. Procédé de revêtement extérieur de tubes métalliques dans le procédé à trois couches, une peinture d'apprêt en poudre à base de résine époxyde étant appliquée sur le tube métallique, un adhésif dur thermoplastique étant appliqué sur la peinture d'apprêt en poudre et une enveloppe de polyoléfine étant ensuite appliquée, caractérisé en ce que la peinture d'apprêt en poudre contient des résines Novolaques époxydées, des agents de réticulation phénoliques, des catalyseurs pour le durcissement résine époxyde-résine phénolique ainsi que des charges se basant sur des modifications cristallines de l'acide silicique.

7. Procédé selon la revendication 6, caractérisé en ce que les résines Novolaques époxydes ont une fonctionnalité moyenne dans le domaine de 2,4 à 2,8 et un poids équivalent en époxyde dans le domaine de 600 à 850.

8. Procédé selon la revendication 6 ou 7, caractérisé en ce que l'on utilise en tant que charges dans la peinture d'apprêt en poudre des modifications de l'acide silicique fonctionnalisées en glycidyle.

9. Procédé selon la revendication 6 à 8, caractérisé en ce que la peinture d'apprêt en poudre contient de 10 à 40 % en poids, par rapport au poids total de la peinture d'apprêt en poudre, de modifications cristallines de l'acide silicique.

10. Procédé selon la revendication 6 à 9, caractérisé en ce que l'on utilise, en tant qu'agent de réticulation phénolique des résines de bisphénol A ou de bisphénol F contenant des groupements hydroxyle ayant un poids équivalent en hydroxyle dans le domaine de 180 à 600.

11. Procédé selon la revendication 6 à 10, caractérisé en ce que l'on utilise, en tant qu'adhésif dur thermoplastique, des copolymérisats en éthylène, en acide (méth)acrylique, et en esters de l'acide (méth)acrylique ayant de 1 à 8 atomes de carbone dans le résidu alcool.

12. Procédé selon la revendication 6 à 11, caractérisé en ce que l'on utilise en tant qu'enveloppe de polyoléfine une enveloppe de polyéthylène.

13. Procédé selon la revendication 6 à 12, caractérisé en ce que le degré de réticulation de la peinture d'apprêt en poudre lors de l'application de l'adhésif dur thermoplastique est de 40 à 60 %.
